# EUROPEAN PATENT APPLICATION

(11) **EP 4 714 864 A1**
(43) Date of publication of application: **25.03.2026**
(21) Application number: 24844260.0
(22) Date of filing: 26.03.2024
(51) Int. Cl.: B65G 1/04, B65G 1/137

(54) **IN-WAREHOUSE PICKING SYSTEM AND CONVEYING SYSTEM**

(30) Priority: 21.07.2023 CN 202310902723
(71) Applicant: Libiao Robotics Holdings Pte. Ltd., 608521 Singapore (SG)
(72) Inventor: ZHU, Jianqiang, Hangzhou, Zhejiang 311199 (CN)
(74) Representative: De Santis, Giovanni
(86) International application number: PCT/CN2024/083883
(87) International publication number: WO 2025/020563

(57) **Abstract**

An in-warehouse picking system and a conveying system, relating to the technical field of warehousing picking. A stereoscopic warehouse comprises a plurality of goods shelves (10), each goods shelf having a multi-layer storage space, goods boxes being placed at storage sites of the storage spaces, and a goods picking apparatus (1) being installed on each goods shelf. According to a current order: each goods picking apparatus drives a first task module to place goods into a docking assembly or a docking box of a goods-carrying robot (105) running at the bottom of each goods shelf, or to retrieve same from the docking assembly or the docking box (4) and put same into the goods boxes (104); each first task module (2) at least comprises a first moving member (13) and a picking mechanism (20); a partition plate (102) having one or more storage sites on the bottommost goods shelf layer is removed from each goods shelf, so as to provide a passage for the goods-carrying robots on the ground; or one or more goods shelf layers (106) are removed from each goods shelf, so as to provide a matching height for supporting the operation of the goods-carrying robots on the ground. The present application mitigates the technical problems of low utilization rate of warehousing spaces, slow goods inflow and outflow speeds, and low sorting efficiency of existing in-warehouse picking systems in the prior art.

## Description

### CROSS-REFERENCE TO RELATED APPLICATION

The present invention claims the priority to the Chinese patent application with the filing No. 202310902723.X filed with the Chinese Patent Office on July 21, 2023, and entitled "IN-WAREHOUSE PICKING SYSTEM AND CONVEYING SYSTEM", the contents of which are incorporated herein by reference in entirety.

### TECHNICAL FIELD

The present invention relates to the technical field of warehouse picking, in particular to an in-warehouse picking system and a conveying system.

### BACKGROUND ART

Warehousing is the most costly part of the logistics. The existing warehousing systems need to build warehousing bases or warehousing centers. A modern logistics warehouse stores goods in a fixed environment, and performs stock out under the instruction of logistics orders according to information such as SKU, date and sequence.

The existing process from the warehouse to sorting, goods are required to pass through the warehouse racks and be moved out by a warehousing freight robot, and the warehousing freight robot then conveys the goods to a sorting platform or a sorting system. However, in this traditional form of warehousing, conveying, and exchanging, the occupied area is large, the conveying efficiency is limited by the warehousing freight robot, and the involvement of specialized sorting systems is required, resulting in extremely high time and application costs.

Consequently, the existing warehousing and conveying systems not only suffer from reduced efficiency in warehousing in and out, insufficient space utilization, and high ground costs, but also are incapable of performing in-warehouse picking within the warehousing environment.

### SUMMARY

The objective of the present invention is to provide an in-warehouse picking system and a conveying system, so as to solve the technical problems of low utilization of warehousing space, slow speed of goods in and out, and low sorting efficiency of the in-warehouse picking system existing in the prior art.

In order to achieve the above objectives, the following technical solutions are adopted in the present invention.

In the first aspect, an in-warehouse picking system is provided in the present invention, which is applied to a stereoscopic warehouse. The stereoscopic warehouse includes a plurality of racks, wherein the racks are provided with multiple tiers of reservation units, bins are placed in the slots of the reservation units, and goods picking devices are installed on the racks. According to a current order:

the goods picking device drives the first task module to place the goods into the docking assembly or the docking box of the freight robot running at the bottom of the rack, or take the goods out from the docking assembly or the docking box and place the goods into the bin. The first task module at least includes a first movable member and a picking mechanism.

The partition plates of one or more slots on the lowest bottom rack tier of the rack are taken down to provide as a channel for a ground freight robot; or
one or more tiers of racks are taken down to provide a matching height to support the running of the freight robot on the ground.

Optionally, the arrangement of the goods picking devices on the rack is specifically realized by: a first transverse rail, a first upright, a first movable member and a connecting mechanism of the first task module.

The first transverse rail is fixed on the rack;
the first upright is vertically arranged on the first transverse rail and can slide transversely;
the first movable member is arranged on the first upright and can slide along the first upright; and
the first movable member is provided with the connecting mechanism of the first task module.

Optionally, the picking mechanism is provided with a suction mechanism and/or a grasping mechanism.

The suction mechanism and/or the grasping mechanism are connected with the first movable member through the first connecting mechanism.

The suction mechanism is in contact with and maintains contact with the goods through the generated suction force until the goods are placed into the docking assembly or the docking box of the freight robot running at the bottom of the rack; or until the goods are taken out from the docking assembly or the docking box and are placed into the bin.

Optionally, the suction mechanism and/or the grasping mechanism include an extension member, and the extension member is connected with the first movable member through the first connecting mechanism.

Optionally, the in-warehouse picking system further includes:
the fixed rail conveying device, wherein the arrangement of the fixed rail conveying device on the rack is specifically realized by: the first transverse rail, the first upright, the first movable member and a connecting mechanism of the second task module.

When the task module is a bin pushing-pulling module (autonomous bin-handling robot), the connecting mechanism of the task module is provided with:
a supporting structure of the bin pushing-pulling module; and
a conveying assembly of the bin pushing-pulling module.

The fixed rail conveying device pulls out the target bin at the target slot of the target rack by utilizing the bin pushing-pulling module, and the picking mechanism of the goods picking device system picks the target goods in the target bin, so as to enable the goods picking device to drive the first task module to place the goods into the docking assembly or the docking box of the freight robot running at the bottom of the rack; and
the bin pushing-pulling module pushes the target bin back.

Optionally, the in-warehouse picking system further includes:
the fixed rail conveying device, wherein the arrangement of the fixed rail conveying device on the rack is specifically realized by: the first transverse rail, the first upright, the first movable member and a second connecting mechanism of the second task module.

When the task module is a bin pushing-pulling module, the connecting mechanism of the task module is provided with:
a supporting structure of the bin pushing-pulling module; and
a conveying assembly of the bin pushing-pulling module.

The picking mechanism of the goods picking device system takes out the target goods from the docking assembly or the docking box of the freight robot, the fixed rail conveying device pulls out the target bin on the target slot of the target rack by utilizing the bin pushing-pulling module, and the picking mechanism places the target goods into the target bin; and
the bin pushing-pulling module pushes the target bin back.

Optionally, the in-warehouse picking system further includes a second transverse rail, and the second transverse rail is fixed at the lower part of the rack. Two transverse rails are connected with the first upright through sliders.

The slider moves on the transverse rails driven by rollers and/or gears, and the rollers and/or gears are driven by a motor.

Optionally, the arrangement of the fixed rail conveying device on the rack further includes a second upright and a second movable member, and the second upright is vertically arranged on the transverse rail and can slide transversely.

The second movable member is arranged on the upright and can slide along the second upright.

The second movable member is provided with a connecting mechanism of the second task module.

Optionally, the arrangement of the fixed rail conveying device on the rack further includes a third upright, and the second task module is arranged between the second upright and the third upright through the connecting mechanism, and
the second task module is driven to be positioned to a goods position or a docking position on the rack.

Optionally, a synchronous pulley, which is driven by a motor and can be controlled by a reducer, drives a synchronous belt to support the first movable member to move on the slide rail of the first upright.

The synchronous pulley, which is driven by a motor and can be controlled by a reducer, drives a synchronous belt to support the second movable member to move on the slide rail of the second upright.

Optionally, the in-warehouse picking system further includes an identification module, and the identification module can be arranged on the goods picking device and/or the fixed rail conveying device.

In the second aspect, a conveying system is provided in the present invention, including the in-warehouse picking system described in any of the aforementioned embodiments.

The following beneficial effects can be realized in the present invention.

In the first aspect, an in-warehouse picking system is provided in the present invention, which is applied to a stereoscopic warehouse. The stereoscopic warehouse includes a plurality of racks, wherein the racks are provided with multiple tiers of reservation units, bins are placed in the slots of the reservation units, and goods picking devices are installed on the racks. According to a current order: the goods picking device drives the first task module to place the goods into the docking assembly or the docking box of the freight robot running at the bottom of the rack, or take the goods out from the docking assembly or the docking box and place the goods into the bin. The first task module at least includes a first movable member and a picking mechanism. The partition plates of one or more slots on the lowest bottom rack tier of the rack are taken down to provide as a channel for a ground freight robot; or one or more tiers of racks are taken down to provide a matching height to support the running of the freight robot on the ground.

In the present invention, by utilizing the docking assembly of the freight robot at the bottom of the rack of the goods picking device, or taking the goods out from the docking assembly or the docking box and placing the goods into the bin, the in-warehouse picking is realized. The goods picking device drives the first task module to place the goods into the docking assembly or the docking box of the freight robot running at the bottom of the rack, or take the goods out from the docking assembly or the docking box and place the goods into the bin. The first task module at least includes a first movable member and a picking mechanism. According to the goods picking device, the transverse rails are provided for the movement of uprights, and through the configuration of racks and the modification of the rack tier at the bottom of the warehousing space, the running channel is provided for the freight robot or the sorting robot, so that the problem of waste of the existing warehousing space is fundamentally solved, thereby making in-warehouse picking in the dense rack scene possible. More importantly, the task module of the warehousing can be driven by the movable member through the fixed rail conveying device to store or take out the bins, to place bins into the docking assembly or the docking box of the freight robot running at the bottom of the rack, or to take the bins out from the docking assembly. The goods/bins in the warehouse can be cooperated with the freight robot or the sorting robot, so as to make the goods warehousing, the transfer of goods/bins and the sorting of goods/bins be accomplished smoothly in the warehousing space. It can greatly improve the utilization of warehousing space, the speed of goods in and out, and the sorting efficiency of the existing rack of in-warehouse picking system.

In addition, a conveying system is provided in the second aspect of the example in the present invention, including the in-warehouse picking system provided by the first aspect. Since the conveying system provided by the example of the present invention includes the in-warehouse picking system provided by the first aspect, the conveying system provided by the example of the present invention is able to achieve all the beneficial effects that can be achieved by the in-warehouse picking system provided by the first aspect.

### BRIEF DESCRIPTION OF THE DRAWINGS

To further clarify the specific embodiments of the present invention or the technical solutions in the prior art, the following provides a brief introduction to the drawings that are used in the description of the specific embodiments or the prior art. It is evident that the drawings described below represent some embodiments of the present invention. For those skilled in the art, other drawings can be obtained according to these drawings without inventive efforts.
FIG. 1 is a schematic structural diagram of a rack provided by the example of the present invention.
FIG. 2 is a schematic structural diagram of a ground freight robot provided by the example of the present invention.
FIG. 3 is a schematic structural diagram of a warehousing rack provided by the example of the present invention.
FIG. 4 is a schematic structural diagram of a plurality of ground freight robots of the in-warehouse picking system provided by the example of the present invention.
FIG. 5 is a schematic structural diagram of an in-warehouse picking system from the first perspective provided by the example of the present invention.
FIG. 6 is a schematic structural diagram of an in-warehouse picking system from the second perspective provided by the example of the present invention.
FIG. 7 is a schematic structural diagram of an in-warehouse picking system from the third perspective provided by the example of the present invention.
FIG. 8 is a schematic structural diagram of a fixed rail conveying device from the fourth perspective of the in-warehouse picking system provided by the example of the present invention.
FIG. 9 is a schematic structural diagram of a rail conveying device from the fifth perspective of the in-warehouse picking system provided by the example of the present invention.
FIG. 10 is a schematic structural diagram of an in-warehouse picking system from the sixth perspective provided by the example of the present invention.
FIG. 11 is a schematic diagram of the partial structure of the rack provided by the example of the present invention.
FIG. 12 is a schematic structural diagram of a conveying system provided by the example of the present invention.

Reference numerals: 1- goods picking device; 10- rack; 101- reservation unit; 102-partition plate; 103- slot; 104- bin; 105- ground freight robot; 106- bottom rack tier; 11- first transverse rail; 12- first upright; 13- first movable member; 14- second task module; 15- first connecting mechanism; 2- first task module; 20- picking mechanism; 201- suction mechanism; 21- second upright; 22- second movable member; 23- second connecting mechanism; 25-docking position; 3- goods; 30- fixed rail conveying device; 31-transverse rail; 32- motor; 33-third upright; 4-docking box; 51- roller; 52- slider.

### DETAILED DESCRIPTION OF EMBODIMENTS

In order to make the purpose, technical solutions and advantages of the examples of the present invention clearer, the technical solutions in the examples of the present invention will be described clearly and completely below in conjunction with the drawings in the examples of the present invention. Obviously, the described example is a part of the examples of the present invention, but not the whole examples. The assemblies of the examples of the present invention, which are generally described and illustrated in the drawings herein, can be arranged and designed in various configurations.

Therefore, the following detailed description of the examples of the present invention provided in the drawings is not intended to limit the scope of the claims in the present invention but only represents selected examples of the present invention. Based on the examples in the present invention, all other examples obtained by those skilled in the art without inventive work belong to the protection scope of the present invention.

It should be noted that similar symbols and letters indicate similar items in the following drawings, so once an item is defined in one drawing, it does not need to be optionally defined and explained in subsequent drawings.

In the description of the present invention, it should be noted that the terms such as "up", "down", "vertical", "horizontal", "inside" and "outside" indicate orientations or positional relationships based on those shown in the drawings, or the orientations or positional relationship that the product of the present invention is usually placed in use. They are intended only to facilitate the description of the present invention and to simplify the description and are not indicative of, or suggestive of, that the referred device or components must have a particular orientation, be constructed and operated with a particular orientation, and therefore are not to be understood as limitations of the present invention. Furthermore, the terms such as "first", "second" and "third" are configured to distinguish descriptions only and are not to be understood as indicating or implying relative importance.

In addition, the terms such as "horizontal" and "vertical" do not mean that the parts are required to be absolutely horizontal or overhanging, but may be slightly inclined. For example, "horizontal" only means that its direction is more horizontal than "vertical" and does not mean that the structure must be perfectly horizontal, but may be slightly inclined.

In the description of the present invention, it should also be noted that the terms "provide", "mount" and "connect" should be broadly understood, for example, it can be fixed connection, detachable connection, or integrated connection; it can be a mechanical connection or an electrical connection; it can be directly connected, or be indirectly connected through an intermediate medium, further can be connected inside two elements. For those skilled in the art, the specific meanings of the above terms in the present invention can be understood in specific circumstances.

The embodiments of the present invention are described in detail below with reference to the drawings. In the case of no conflict, the following examples and features in the examples can be combined with each other.

### Example 1

For clarity and convenience of explanation, an in-warehouse picking system is provided in the example, and the in-warehouse picking system involved in the present specification at least includes one or more goods picking devices, warehousing racks and a plurality of ground freight robots (AGV)

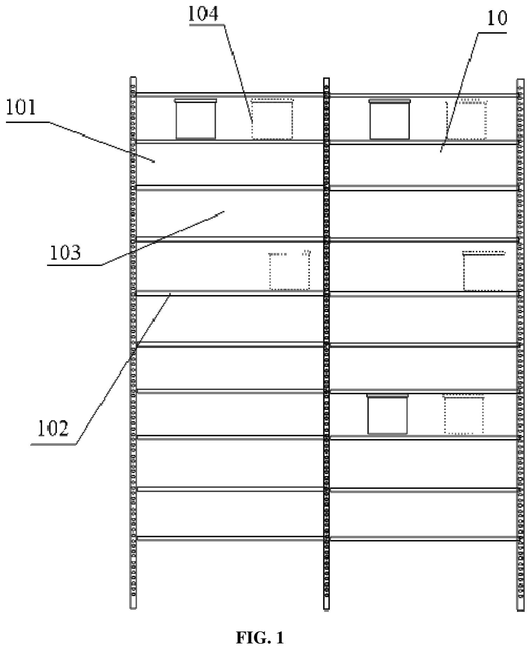

FIG. 1 shows a structural diagram of a warehousing rack, racks 10 are applied to warehousing. The racks 10 are provided with multiple tiers of reservation units 101, and bins 104 are placed in the slots 103 of the reservation units 101. The racks are provided with the partition plates 102 in the transverse direction for supporting the bins 104.

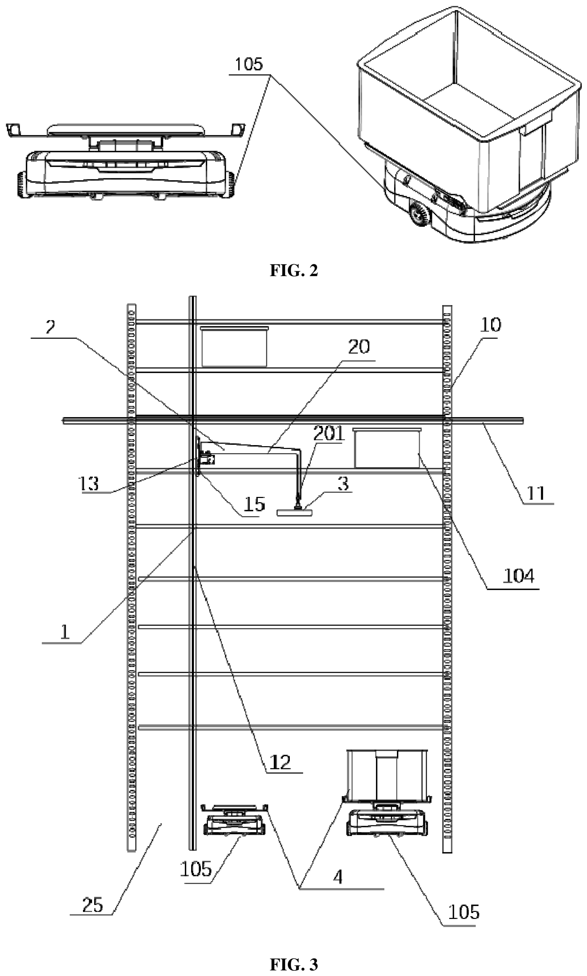

Referring to FIG. 2, a plurality of ground freight robots (AGV) 105 can dock bins and goods.

Referring to FIG. 3, the goods picking device 1 is mounted on the rack, and the goods picking device 1 drives the first task module 2 to place the goods 3 into the docking assembly or the docking box 4 of the ground freight robot 105 running at the bottom of the rack 10, or take the goods out from the docking assembly or the docking box 4 and place the goods into the bin 104. The first task module 2 at least includes a first movable member 13 and a picking mechanism 20.

The arrangement of the goods picking device 1 on the rack 10 is specifically realized by:
a first transverse rail 11, a first upright 12, a first movable member 13 and a connecting mechanism of the first task module 2.

The first transverse rail 11 is fixed on the rack 10.

It should be noted that the first transverse rail 11 is fixed on the beam or upright of the rack 10. When the rack is long in the transverse direction, the fixing of the transverse rail needs the help of the beam and upright of the single rack, and the transverse rail extends to the beam of the adjacent rack.

The first upright 12 is vertically arranged on the first transverse rail 11 and can slide transversely.

The first upright 12 slides along the first transverse rail 11, so that the first movable member 13 can be positioned in each column of the rack.

The first movable member 13 is arranged on the first upright 12 and can slide along the first upright 12.

Through the above arrangement, the first movable member 13 can move transversely and longitudinally, so that the first movable member 13 can be positioned at each tier of the rack.

The first movable member 13 is provided with the first connecting mechanism 15 of the first task module 2.

The first task module 2 is driven by the first movable member 13, to store or take out the goods 3 by utilizing the picking mechanism, and place the goods into the docking assembly or the docking box of the ground freight robot 105 running at the bottom of the rack.

It should be noted that, in the solution of the present invention, the bottom partition plate of the warehousing rack is removed, wherein the partition plate refers to the parts that provide supporting for the slots of different types of warehousing racks and the surrounding parts such as beams that stabilize each tier. Taking down the partition plate to provide the matching heights requires taking down the surrounding parts that will block the ground freight robot from running on the ground. The partition plate is not limited to the materials and styles provided in the warehousing rack. For supporting the running of the ground freight robot on the ground and performing the docking action, the bottom partition plates between the adjacent uprights of the warehousing rack need to be taken down to form the docking position 25 for the ground freight robot. It should be additionally noted that the bottom partition plate of the rack includes the partition plate itself and the fixed beam, thus providing the moving space for the ground freight robot.

More specifically, the picking mechanism includes a suction mechanism 201 and/or a grasping mechanism, the suction mechanism 201 and/or the grasping mechanism (not shown) can be connected with the first movable member 13 through the first connecting mechanism 15 of the first task module. The first connecting mechanism 15 is an extension member of the suction mechanism 201 and/or the grasping mechanism, wherein the extension member can be a multi-segment mechanical arm with degrees of freedom. The suction mechanism 201 can be in contact with and maintains contact with the goods through the generated suction force until the goods 3 are placed into the docking assembly or the docking box of the freight robot running at the bottom of the rack; or until the goods 3 are taken out from the docking assembly and are placed into the bin.

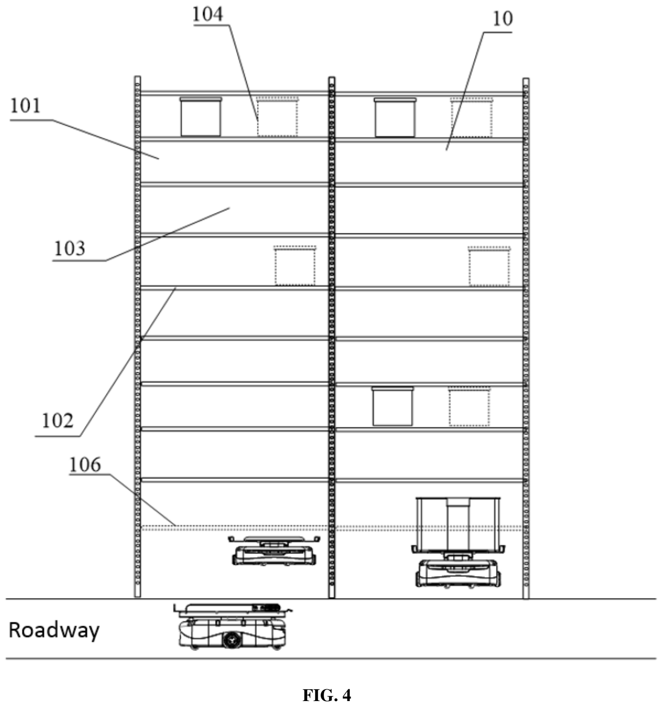

Referring to FIG. 4, through the arrangement in the example, when the actions of sorting and/or storing or taking out goods are completed, the goods can be picked up by the ground freight robot 105, and the goods can be transferred, sorted and delivered to the destination goods position or sorting position, or the transportation position after sorting.

The partition plates 102 of one or more slots on the lowest bottom rack tier of the rack are taken down to provide as a channel for a ground freight robot 105.

One tier or the bottom rack tier 106 of the rack is taken down to provide a matching height to support the running of the ground freight robot 105 on the ground.

In FIG. 4, the roadway where the ground freight robot 105 moves on the ground between two racks is shown.

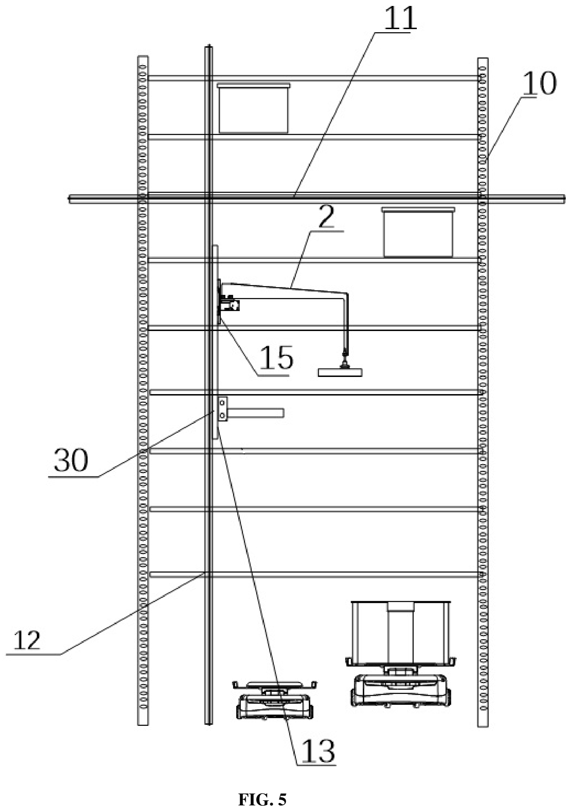

Referring to FIG. 5, the fixed rail conveying device 30 is further shown, and the arrangement of the fixed rail conveying device 30 on the rack is specifically realized by: the first transverse rail 11, the first upright 12, the first movable member 13 and a connecting mechanism of the second task module 14.

Referring to the situation in FIG. 5, when the first task module 2 and/or the second task module 14 are both mounted on the first transverse rail, the first upright and the first movable member, the connecting mechanism of the first task module and the connecting mechanism of the second task module can be integrally arranged to drive the first task module to sort goods and drive the second task module to store bins.

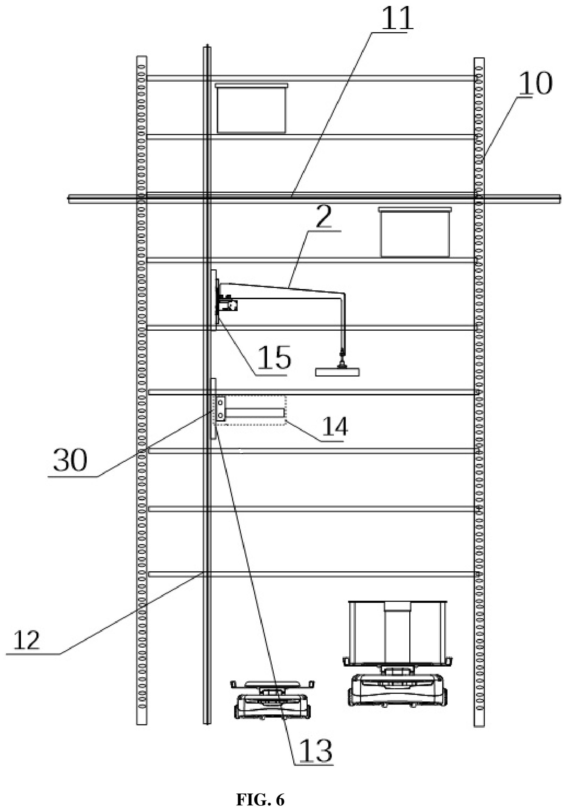

Referring to FIG. 6, in another situation, when the first task module and/or the second task module are both mounted on the first transverse rail, the first upright and the first movable member, the connecting mechanism of the first task module and the connecting mechanism of the second task module are separately arranged to cooperate according to the current task.

When the task module is a bin pushing-pulling module, the task module at least includes:
a supporting structure of the bin pushing-pulling module, such as a loading rack; and
a conveying assembly of the bin pushing-pulling module; such as a conveying belt, wherein a conveyor motor is required to drive the conveying belt.

The fixed rail conveying device pulls out the target bin at the target slot of the target rack by utilizing the bin pushing-pulling module, and the picking mechanism of the goods picking device system picks the target goods in the target bin, so as to enable the goods picking device to drive the first task module to place the goods into the docking assembly or the docking box of the freight robot running at the bottom of the rack; or
the picking mechanism of the goods picking device system takes out the target goods from the docking assembly or the docking box of the freight robot, the fixed rail conveying device pulls out the target bin on the target slot of the target rack by utilizing the bin pushing-pulling module, and the picking mechanism places the target goods into the target bin, and
the bin pushing-pulling module pushes the target bin back.

In practical application, as mentioned above, the connecting mechanism of the task module is the basic structure that enables the connection to be realized with different task modules, and in the case of other task modules, the connecting member is set according to the specific function of the task module, which is not limited herein.

It should be specially noted that, referring to FIG. 1 to FIG. 5, in the present example, through the configuration of racks and the modification of the bottom rack tier, with the help of the cooperation of the goods picking device 1 and the ground freight robot 105 or the sorting robot (not shown), the problem of low efficiency of the transfer of goods/bins and the sorting in the existing rack warehousing is fundamentally solved. Moreover, the application scene of the racks is expanded, making the goods warehousing, the transfer of goods/bins and the sorting of goods/bins be accomplished in the warehousing space, so as to greatly improve the utilization of warehousing space, the speed of goods in and out, and the sorting efficiency of the existing rack of in-warehouse picking system.

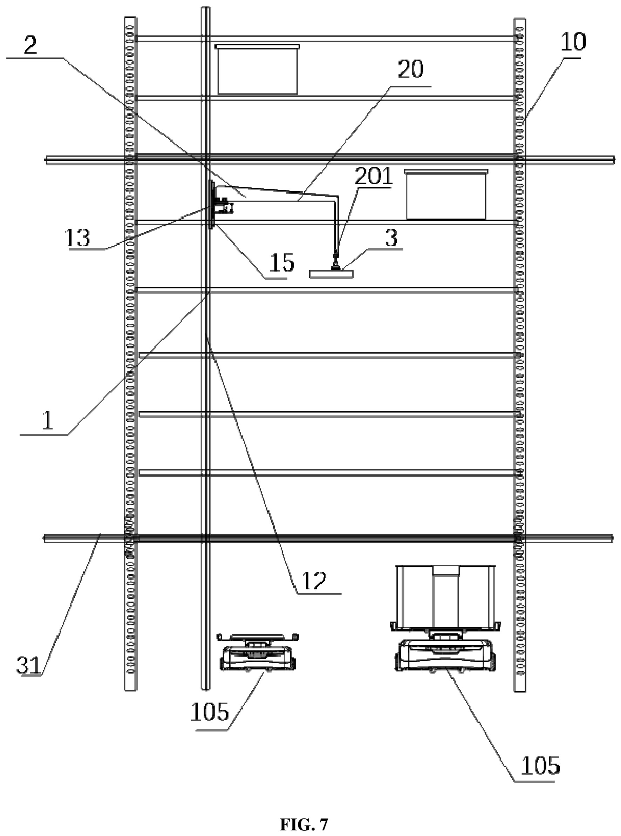

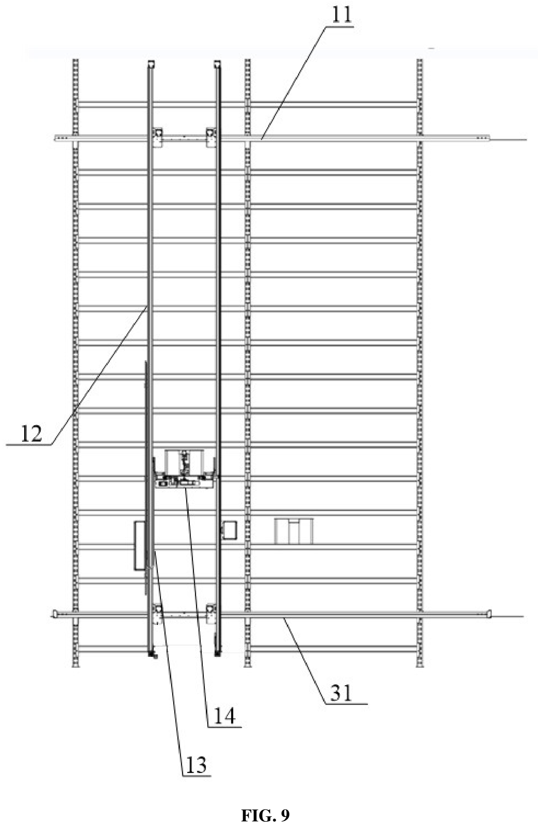

Referring to FIG. 7, an in-warehouse picking system is shown. On the basis of the illustrations and corresponding explanations of FIG. 1 and FIG. 6, in FIG. 7, another transverse rail 31 is shown, which is fixed at the lower part of the rack 10, and can be supported to roll on the transverse rail 31 by a roller driven by a motor 32 (labeled in FIG. 9) mounted at the lower part of the first upright 12.

It should be noted that the roller is an optional solution. Moreover, the movement of the upright on the beam can be realized by utilizing gears or the combination of gears and rollers. When the gear is provided as the conveying mode, it is necessary to cooperate with the tooth chain to realize the movement. The specific way can be referred to the prior art. In the case of a combination of gear and roller, the gear and the tooth chain are engaged to achieve conveying to drive the roller to move, so as to realize the movement of the upright on the beam. More optionally, the motor 32 drives the roller to enable the parts to run, which can be implemented by using a wired (cable, flexible conductive material, and wear-resistant wire) manner, or can be implemented by using a wireless manner, such as a button battery that is charged to support the running. The specific manner is not limited herein.

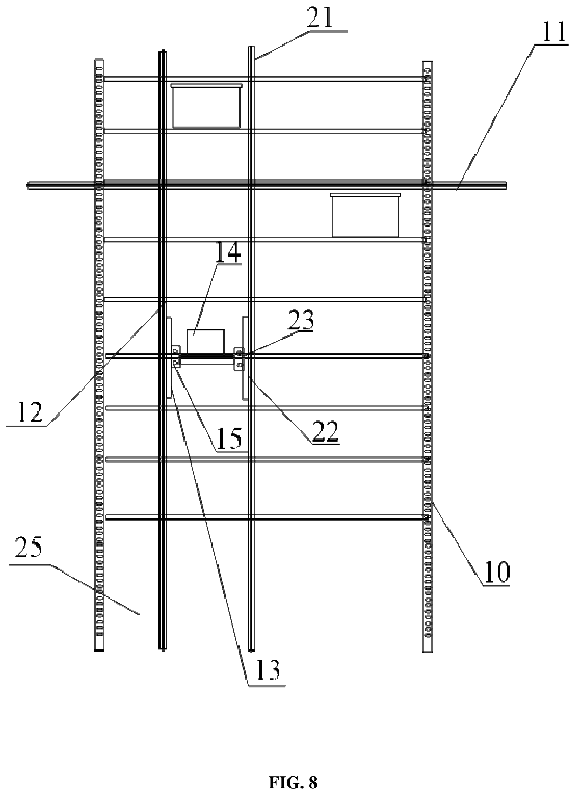

On the basis of the illustrations and explanations of FIG. 5 and FIG. 6, the following are shown in FIG. 8 and FIG. 9.

The arrangement of the fixed rail conveying device 30 on the rack further includes a second upright 21 and a second movable member 22, wherein the second upright 21 is vertically arranged on the first transverse rail 11 and can slide transversely, and the second movable member 22 is arranged on the second upright 21 and can slide along the second upright.

The second movable member 22 is provided with a second connecting mechanism 23 of the second task module 14.

The second task module 14 is arranged between the first upright 12 and the second upright 21 through a second connecting mechanism 23.

The first movable member and the second movable member drive the second task module 14 to position to a goods position or a docking position on the rack 10.

The docking position can be understood as the position that completes the delivery of the goods from the second task module 14 with the ground freight robot 105 after storing or taking out the bins and/or goods from the goods position of the rack.

In the present example, a stable rail conveying device is more required in a large-scale rack system. Therefore, upper and lower two transverse rails are arranged on the rail assembly to fully fix the first upright 12 and the second upright 21, so that the tasks of pushing, pulling, docking and sorting of goods/bins can be carried out reliably.

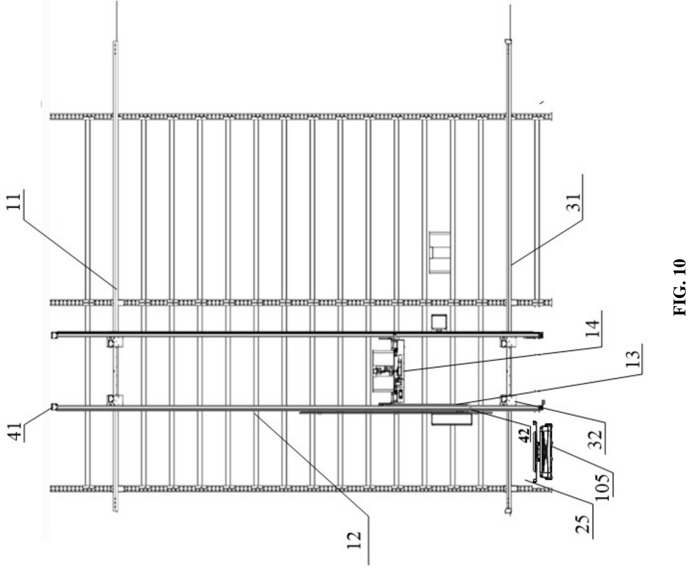

It should be noted that, in the examples related to FIG. 1 to FIG. 9 and FIG. 10, the ground freight robot is a robot running on the ground of the bottom of the rack. As an achievable example, AGV can be chosen as the ground freight robot. AGV, that is, automated guided vehicle, is also commonly called AGV trolley; or AMR, that is, autonomous mobile robot.

Moreover, in order to be fully disclosed, the ground freight robot can be chosen as a freight robot or a sorting robot in the disclosed text, wherein the ground freight robot performs path planning under the control of the server, or performs autonomous path planning. The ground freight robot is provided with a planar moving assembly and a docking assembly that supports pushing and pulling of bins. In order to improve the transportation efficiency, the ground freight robot can run on the ground directly below the rack, and can cooperate with the warehousing rack to take down the bottom partition plate. The goods are placed on the docking assembly of the ground freight robot, driven by the movable members of the task module. The ground freight robot can be a freight robot or a sorting robot. With the above cooperation, the goods warehousing, the transfer of goods/bins and the sorting of goods/bins can be accomplished in the warehousing space.

As an achievable way, according to the similar principle, the movable member running on the slide rail of the upright can be realized by the way shown in the following illustration, a more specific electric control method, which is not the limitation and has no specific illustration herein.

A synchronous pulley, which is driven by a motor 32 and can be controlled by a reducer, drives a synchronous belt to support the first movable member to move on the slide rail of the first upright.

The synchronous pulley, which is driven by a motor 32 and can be controlled by a reducer, drives a synchronous belt to support the second movable member to move on the slide rail of the second upright.

The above arrangement can not only accurately locate the position between the task module and the bin, but also greatly improve the utilization of warehousing space, the speed of goods in and out, and the sorting efficiency of the existing in-warehouse picking system.

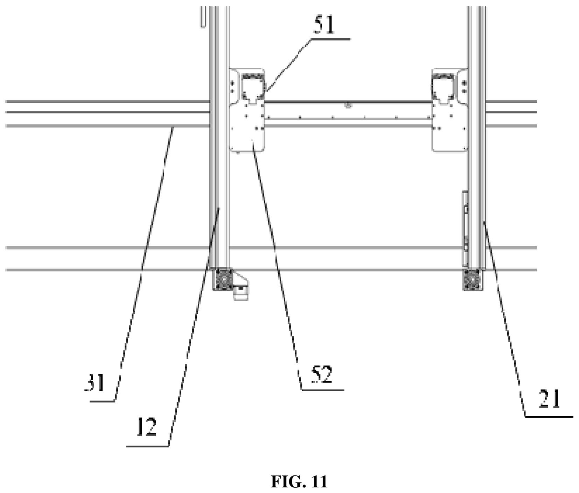

Referring to FIG. 11, a partial structure of an in-warehouse picking system is shown, including the following.

In the present example, the connecting structure of the first transverse rail 11, the first upright 12 and the second upright 21 is shown in FIG. 1. Referring to FIG. 3, the slider 52 can be driven by the roller 51 to move on the transverse rail 31. The first upright 12 and the second upright 21 are sleeved on the fixed position of the slider 52, and the roller 51 contacts with the transverse rail 31 to realize the smooth movement.

The above arrangement can be one implementation, and the implementation is not limited thereto.

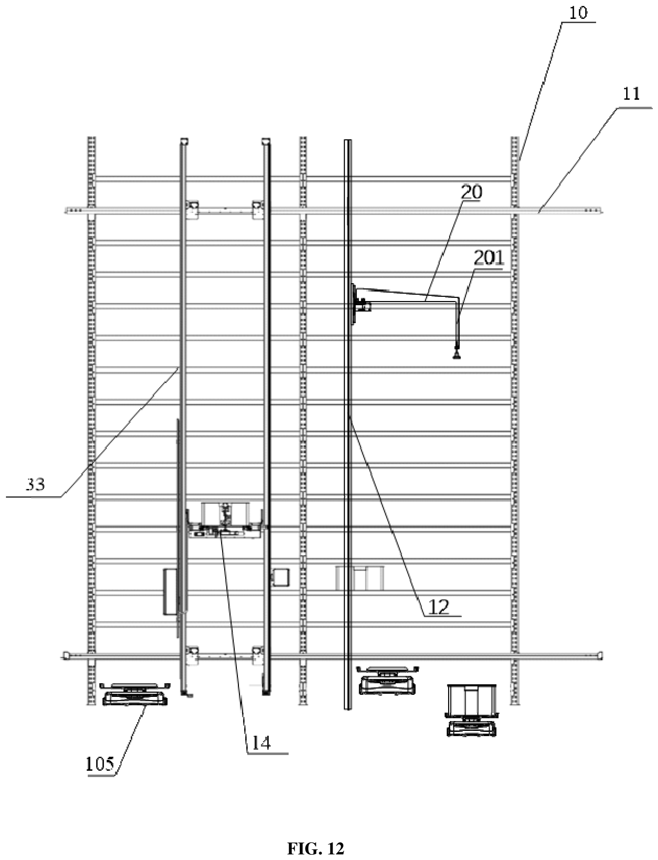

Referring to FIG. 12, the in-warehouse picking system is shown, and the arrangement of the fixed rail conveying device on the rack further includes a third upright 33, and the second task module 14 is arranged between the second upright 21 and the third upright 33 through a connecting mechanism, and the second task module 14 is driven to be positioned at a goods position or a docking position on the rack 10.

Referring to FIG. 1 to FIG. 11, in the present example, the fixed rail conveying device and the goods picking device are respectively arranged at different uprights. In a large-scale dense warehousing scene, such as warehouses storing more than 100,000 bins with 5,000 bins/hour flow, the fixed rail conveying devices and the goods picking devices can be mounted separately more than one on the same rack to meet the demand of large-flow orders. When the fixed rail conveying device and the goods picking device system work together, taking a warehouse-out order as an example, X goods of a certain A order or a certain SKU (Stock Keeping Unit, that is, a basic unit for inventory in and out measurement) needs to be delivered out, the fixed rail conveying device utilizes the second task module, that is, the bin pushing-pulling module, to pull out the target bin at the target slot of the target rack, so that the X goods can be taken by the suction mechanism 201 and/or the grasping mechanism of the goods picking device system. Before sucking the goods, an identification module is required to identify X goods or a certain SKU, and the identification module can be arranged on the goods picking device and/or the fixed rail conveying device. The identification module can be a monocular camera, a laser camera or a depth-of-field camera.

After the above-mentioned picking process is completed, the identification module is utilized for accurate positioning, and the X goods or a certain SKU indicated by the order are placed into the docking position of the ground freight robot by utilizing the goods picking device. The ground freight robot will move to the next docking position or workstation.

In another example, one or more racks are provided. Referring to FIG. 1 to FIG. 12, the structure and working principle of the racks are shown. The racks can be configured with the in-warehouse picking device, and/or, the fixed rail conveying device. The in-warehouse picking device and/or the fixed rail conveying device are mounted on one or more racks during running and can run independently under the instructions of the control chip and software, or run synergistically with the built-in warehouse management software on the server side. At the same time, the one or more racks can be ordinary racks, or can be precision racks, and the rack height and ground flatness are not limited. In addition, an in-warehouse picking system is disclosed in the present invention, which is configured as the in-warehouse picking system shown in FIG. 6 with a plurality of ground freight robots 105. Based on the arrangement, the efficiency of storing and taking out, transporting and sorting goods 3 can be greatly improved, and the technical requirements of rapid transferring and conveying in various warehousing scenes can be met.

### To sum up:

The in-warehouse picking system provided by the example of the present invention, by utilizing the docking assembly of the freight robot at the bottom of the rack 10 of the goods picking device 1, or taking the goods out from the docking assembly or the docking box 4 and placing the goods into the bin 104, achieves the in-warehouse picking. The goods picking device 1 drives the first task module 2 to place the goods 3 into the docking assembly or the docking box 4 of the freight robot running at the bottom of the rack 10, or take the goods out from the docking assembly or the docking box 4 and place it into the bin 104. The first task module 2 at least includes a first movable member 13 and a picking mechanism 20. According to the goods picking device 1, the first transverse rails 11 are arranged for the movement of uprights, and through the configuration of racks 10 and the modification of the rack tier at the bottom of the warehousing space, the running channel is provided for the freight robot or the sorting robot, so that the problem of waste of the existing warehousing space is fundamentally solved, thereby making in-warehouse picking in the dense rack 10 scene possible. More importantly, the task module of the warehousing can be driven by the movable member through the fixed rail conveying device 30 to store or take out bins 104, to place bins into the docking assembly or the docking box 4 of the freight robot running at the bottom of the rack 10, or to take bins 104 out from the docking assembly. Through this way, the goods 3/bins 104 in the warehouse can be cooperated with the freight robot or the sorting robot, making the warehousing of goods 3, the transfer of goods 3/bins 104 and the sorting of goods 3/bins 104 be accomplished smoothly in the warehousing space, so as to greatly improve the utilization of warehousing space, the speed of goods 3 in and out, and the sorting efficiency of the existing rack 10 of in-warehouse picking system.

### Example 2

A conveying system is provided in the present example, the conveying system includes the in-warehouse picking system according to any alternative embodiment in Example 1.

Since the conveying system provided in the present example includes the in-warehouse picking system described in Example 1, the conveying system provided by the present example can achieve all the beneficial effects that can be achieved by the in-warehouse picking system in Example 1, and its specific structure and the effects that can be achieved can be obtained by referring to the alternative embodiments in Example 1.

Finally, it should be explained that all the examples in the present specification are described in a progressive way, and each example focuses on the differences from other examples, and the same and similar parts between the examples can be referred to each other. The above examples are only configured to illustrate the technical solutions of the present invention, but not to limit it. Although the present invention has been described in detail with reference to the foregoing examples, it should be understood by those skilled in the art that the technical solutions described in the foregoing examples can still be modified, or some or all of its technical features can be replaced by equivalents. However, these modifications or substitutions do not make the essence of the corresponding technical solutions deviate from the scope of the technical solutions of various examples of the present invention.

### Industrial Practicability

An in-warehouse picking system and a conveying system are provided in the present invention, solving the technical problems of low utilization of warehousing space, slow speed of goods in and out, and low sorting efficiency of the in-warehouse picking system existing in the prior art, and greatly improving the utilization of warehousing space, the speed of goods in and out, and the sorting efficiency of the existing rack of in-warehouse picking system.

## Claims

1. An in-warehouse picking system, applicable to a stereoscopic warehouse, **characterized in that** the stereoscopic warehouse comprises a plurality of racks, and the rack is provided with multiple tiers of reservation units, a bin is placed in a slot of the reservation units, and a goods picking device is installed on the rack, wherein according to a current order:
the goods picking device drives a first task module to place a goods into a docking assembly or a docking box of a freight robot running at a bottom of the rack, or take the goods out from the docking assembly or the docking box and place the goods into the bin; and the first task module at least comprises a first movable member and a picking mechanism;
partition plates of one or more slots on a lowest bottom rack tier of the rack are taken down to provide as a channel for a ground freight robot; or
one or more tiers of racks are taken down to provide a matching height to support running of the freight robot on a ground.

2. The in-warehouse picking system according to claim 1, wherein an arrangement of the goods picking device on the rack is realized by: a first transverse rail, a first upright, a first movable member and a first connecting mechanism of the first task module, wherein
the first transverse rail is fixed on the rack;
the first upright is vertically arranged on the first transverse rail and can slide transversely;
the first movable member is arranged on the first upright and can slide along the first upright; and
the first movable member is provided with the first connecting mechanism of the first task module.

3. The in-warehouse picking system according to claim 2, wherein the picking mechanism comprises a suction mechanism and/or a grasping mechanism;
the suction mechanism and/or the grasping mechanism is connected with the first movable member through the first connecting mechanism; and
the suction mechanism is in contact with and maintains contact with the goods through a generated suction force until the goods are placed into the docking assembly or the docking box of the freight robot running at the bottom of the rack; or until the goods are taken out from the docking assembly or the docking box and are placed into the bin.

4. The in-warehouse picking system according to claim 2, wherein the suction mechanism and/or the grasping mechanism comprise an extension member, and the extension member is connected with the first movable member through the first connecting mechanism.

5. The in-warehouse picking system according to any one of claims 1-4, further comprising:
a fixed rail conveying device, wherein an arrangement of the fixed rail conveying device on the rack is realized by: the first transverse rail, the first upright, the first movable member and a second connecting mechanism of a second task module;
when the task module is a bin pushing-pulling module, a connecting mechanism of the task module comprises:
a supporting structure of the bin pushing-pulling module; and
a conveying assembly of the bin pushing-pulling module;
the fixed rail conveying device pulls out a target bin at a target slot of a target rack by utilizing the bin pushing-pulling module, and the picking mechanism of the goods picking device system picks a target goods in the target bin, so as to enable the goods picking device to drive the first task module to place the goods into the docking assembly or the docking box of the freight robot running at the bottom of the rack; and
the bin pushing-pulling module pushes the target bin back.

6. The in-warehouse picking system according to any one of claims 1-4, further comprising:
a fixed rail conveying device, and an arrangement of the fixed rail conveying device on the rack is realized by: a first transverse rail, a first upright, a first movable member and a second connecting mechanism of a second task module;
when the task module is a bin pushing-pulling module, a connecting mechanism of a task module comprises:
a supporting structure of the bin pushing-pulling module; and
a conveying assembly of the bin pushing-pulling module;
the picking mechanism of the goods picking device system takes out a target goods from the docking assembly or the docking box of the freight robot, the fixed rail conveying device pulls out a target bin on a target slot of a target rack by utilizing the bin pushing-pulling module, and the picking mechanism places the target goods into the target bin, and
the bin pushing-pulling module pushes the target bin back.

7. The in-warehouse picking system according to any one of claims 2-6, further comprises a second transverse rail, wherein the second transverse rail is fixed at a lower part of the rack; and two transverse rails are connected with the first upright through a slider, wherein
the slider moves on the transverse rails driven by a roller and/or a gear, and the roller and/or the gear is driven by a motor.

8. The in-warehouse picking system according to claim 7, wherein an arrangement of the fixed rail conveying device on the rack further comprises a second upright and a second movable member, wherein the second upright is vertically arranged on the transverse rail and can slide transversely,
the second movable member is arranged on the upright and can slide along the second upright, and
the second movable member is provided with the second connecting mechanism of the second task module.

9. The in-warehouse picking system according to claim 7, wherein an arrangement of the fixed rail conveying device on the rack further comprises a third upright;
the second task module is arranged between the second upright and the third upright through the second connecting mechanism; and
the second task module is driven to be positioned to a goods position or a docking position on the rack.

10. The in-warehouse picking system according to claim 7, comprising a synchronous pulley, wherein the synchronous pulley is driven by a motor and can be controlled by a reducer; the synchronous pulley drives a synchronous belt to support the first movable member to move on a slide rail of the first upright; and drives the synchronous belt to support the second movable member to move on a slide rail of the second upright.

11. The in-warehouse picking system according to claim 7, further comprising an identification module, wherein the identification module can be arranged on the goods picking device and/or the fixed rail conveying device.

12. The in-warehouse picking system according to any one of claims 1-11, further comprising:
the freight robot and/or the ground freight robot, wherein the freight robot and/or the ground freight robot is provided with a planar moving assembly and the docking assembly or the docking box, wherein the docking assembly or the docking box are configured to support pushing and pulling the bins and the goods.

13. The in-warehouse picking system according to claim 12, wherein the ground freight robot performs a path planning under a control of a server, or
the ground freight robot performs an autonomous path planning.

14. A conveying system, **characterized by** comprises the in-warehouse picking system according to any one of claims 1-13.
